**Europäisches Patentamt**

**European Patent Office**

**Office européen des brevets**

(11) Numéro de publication : **0 478 458 A1**

(19)

(12) ## DEMANDE DE BREVET EUROPEEN

(21) Numéro de dépôt : **91402571.3**

(51) Int. Cl.⁵ : **G01J 11/00**

(22) Date de dépôt : **26.09.91**

(30) Priorité : **28.09.90 FR 9012010**

(43) Date de publication de la demande :
**01.04.92 Bulletin 92/14**

(84) Etats contractants désignés :
**DE FR GB**

(71) Demandeur : **COMMISSARIAT A L'ENERGIE ATOMIQUE**
**31-33, rue de la Fédération**
**F-75015 Paris (FR)**

(72) Inventeur : **Gontier, Dominique**
**13 Chemin des Caudrals**
**F-91100 Saintry (FR)**
Inventeur : **Huilizen, Jean-Claude**
**4 Allée du Sycomore**
**F-94470 Boissy Saint Leger (FR)**
Inventeur : **Mens, Alain**
**10 rue Montaleau**
**F-94370 Sucy en Brie (FR)**

(74) Mandataire : **Lhoste, Catherine et al**
**BREVATOME 25, rue de Ponthieu**
**F-75008 Paris (FR)**

(54) **Dispositif de calibrage d'un photodétecteur rapide.**

(57)   Ce dispositif de calibrage comprend une source lumineuse (30) pour émettre une impulsion lumineuse incidente, une fibre optique de calibrage (10) de longueur déterminée, possédant une première et une seconde extrémités (12, 14) polies, la première extrémité (12) étant arrangée pour recevoir l'impulsion lumineuse et la seconde extrémité (14) étant disposée en regard du photodétecteur et des moyens semi-réfléchissants (16, 17) disposés à chaque extrémité (12, 14) de la fibre optique de calibrage (10).
Application au calibrage d'une caméra à balayage ou de tout autre photodétecteur rapide.

**EP 0 478 458 A1**

La présente invention a pour objet un dispositif de calibrage d'un photodétecteur rapide. Elle s'applique notamment au calibrage d'une caméra à balayage.

Par photodétecteur rapide, on entend les photodétecteurs aptes à déterminer des durées d'impulsions lumineuses de l'ordre de la centaine de picosecondes et moins. Dans la suite du texte, parmi ces photodétecteurs, on prend comme exemple le cas de la caméra à balayage.

On rappelle qu'une caméra à balayage est munie d'une fente d'entrée. Cette fente, éclairée par une impulsion lumineuse à mesurer, illumine un photodétecteur, générateur d'un faisceau d'électrons dont l'intensité est proportionnelle à l'intensité de l'impulsion lumineuse. La fente qui éclaire le générateur d'électrons produit un faisceau plat qui passe dans une optique électronique et est dévié entre deux plaques conductrices parallèles à la fente d'entrée, subissant une différence de potentiels variant continûment au cours du temps. Le faisceau d'électrons excite un écran fluorescent de visualisation sur lequel se forme l'image de la fente, étalée sur une longueur proportionnelle à la durée de l'impulsion lumineuse, suivant un axe perpendiculaire à l'image de la fente sur l'écran (axe temporel). La brillance de l'image de la fente est proportionnelle à l'intensité de l'impulsion lumineuse.

Pour des impulsions lumineuses beaucoup plus courtes que la durée de balayage de l'écran fluorescent et se suivant à un taux de répétition élevé, on voit apparaître sur l'écran une série de taches allongées (images de la fente d'entrée aux instants d'apparition des impulsions) et étalées selon l'axe temporel proportionnellement à l'écart entre les impulsions incidentes.

Pour que la caméra soit un instrument de mesure utile, on doit pouvoir relier de manière certaine des longueurs reperées sur l'écran fluorescent à des durées. On doit donc calibrer la caméra à balayage. Cette calibration doit aussi permettre de relier la brillance d'une image à une intensité d'une impulsion lumineuse.

Usuellement, on mesure la différence de potentiels appliquée sur les plaques pour la déviation du faisceau d'électrons et l'on considère que le déplacement de l'image sur l'écran est proportionnel à cette différence de potentiels. Mais cette mesure est approximative, car elle ne tient pas compte des réactions du tube cathodique, en particulier de la capacité parasite induite entre les plaques.

De manière connue, espacées aussi des impulsions lumineuses calibrées se succédant à une fréquence de répétition connue. Ces impulsions lumineuses peuvent par exemple provenir d'une diode laser délivrant des impulsions lumineuses à des fréquences avoisinant le gigahertz. Mais la fréquence de répétition, la durée des impulsions et leur intensité peuvent subir des variations notables que l'on peut difficilement mesurer. Ce phénomène rend peu fiable le calibrage effectué grâce à de telles diodes.

De manière connue, pour produire des impulsions lumineuses calibrées en durée, intensité et fréquence de répétition, on utilise aussi un interféromètre du type Fabry-Pérot constitué par deux lames semi-réfléchissantes espacées d'une distance déterminée.

Une impulsion lumineuse introduite dans le Fabry-Pérot produit en sortie une série d'impulsions d'intensité décroissante mais connue et espacées par le temps d'un aller et retour entre les deux lames. Un tel dispositif est décrit dans le document Photonics Spectra, vol.16, n°3, Mars 1982, pages 56 à 60, N.H.Schiller et al. "Picosecond streak cameras : step-by-step calibration.

Le problème posé par un tel dispositif est qu'il ne peut pas être intégré facilement au dispositif d'expérimentation utilisant une caméra à balayage.

Lorsqu'une mesure précise doit être effectuée et qu'un calibrage s'avère alors nécessaire, la caméra à balayage doit être démontée, retirée de l'expérience en cours et placée sur un banc de calibration séparé. Des opérations longues et fastidieuses sont alors nécessaires pour aligner les composants optiques (laser, Fabry-Pérot, ...) et réaliser le calibrage. La caméra doit ensuite être remise en place dans le dispositif d'expérimentation.

La présente invention pallie à ces divers inconvénients. Elle permet notamment un calibrage rapide et précis d'une caméra à balayage ou de tout autre photodétecteur rapide, sans qu'il soit nécessaire de placer le photodétecteur sur un banc de calibrage extérieur.

La présente invention se rapporte donc à un dispositif de calibrage d'un photodétecteur rapide comprenant :

une source de lumière pour émettre une impulsion lumineuse incidente,

une fibre optique de calibrage de longueur déterminée, possédant une première et une seconde extrémités polies, la première extrémité étant arrangée pour recevoir l'impulsion lumineuse incidente et la second extrémité étant disposée en regard du photodétecteur et des moyens semi-réfléchissants disposés à chaque extrémité de la fibre optique de calibrage.

La longueur de la fibre de calibrage est choisie de manière à obtenir, à partir d'une impulsion incidente monochromatique introduite en entrée (c'est-à-dire à sa première extrémité), une série d'impulsions délivrées en sortie (c'est-à-dire à sa seconde extrémité) et séparées par une durée déterminée par le temps d'un aller et retour dans la fibre de calibrage.

Les intensités des impulsions successives fournies par la fibre de calibrage sont dans un rapport connu et déterminé par le choix des coefficients de réflexion des moyens semi-réfléchissants.

De manière avantageuse, les moyens semi-réfléchissants possèdent des coefficients de réflexion R1 et R2 tels que le produit de R1 par R2 soit sensiblement égal à 0,5.

Ainsi, deux impulsions succcessives de sortie présentent des intensités dans un rapport 1/2, ce qui facilite l'étalonnage de la réponse du photodétecteur à un phénomène de brillance donnée.

Selon une variante préférée de réalisation, le coefficient de réflexion R1 est sensiblement égal au coefficient R2.

Avantageusement, les moyens semi-réfléchissants sont constitués par des dépôts multidiélectriques déposés sur chacune des extrémités la fibre optique de calibrage.

Avantageusement, la fibre optique de calibrage du dispositif de l'invention comprend des connecteurs fixés solidairement sur chaque extrémité terminale de la fibre optique de calibrage.

Grâce à ces connecteurs, la fibre optique de calibrage peut facilement être insérée dans un parcours optique réalisé par des fibres optiques. La fibre optique de calibrage alors alignée par construction permet un emploi pratique et aisé du dispositif de l'invention.

Les caractéristiques et avantages de l'invention apparaîtront mieux après la description qui suit donnée à titre explicatif et nullement limitatif. Cette description se réfère à une figure annexée unique représentant schématiquement un dispositif conforme à l'invention.

Le dispositif selon l'invention comprend une fibre optique de calibrage 10 multimode de longueur déterminée, par exemple 32,5 mm, et polie à ses extrémités 12, 14.

Un dépôt multidiélectrique 16, 17 est déposé respectivement sur chaque extrémité 12, 14 réalisant des moyens semi-réfléchissants. Ces dépôts 16 et 17 ont respectivement un coefficient de réflexion R1 et R2, égal à environ 0,7.

Les extrémités 12 et 14 de la fibre optique de calibrage 10 sont munies respectivement d'un connecteur 18, 19 par exemple du type de celui commercialisé par la Société ATI sous la référence 512 F 280 V00 assurant ainsi son montage et son démontage sur tout banc d'expérimentation.

Sur l'exemple représenté, on voit que le dispositif de calibrage est utilisé pour le calibrage d'une caméra à balayage 20.

La fibre optique de calibrage 10 est connectée à une première fibre optique 22, dite d'entrée, par un connecteur 24 monté sur le connecteur 18 et à une seconde fibre optique 26, dite de sortie, par un connecteur 28 monté sur le connecteur 19. La première fibre optique 22 guide une impulsion lumineuse délivrée par un laser 30, jusqu'à la fibre de calibrage; la seconde fibre optique 26 guide la série d'impulsions lumineuses délivrées par la fibre optique de calibrage jusqu'au photodétecteur 20 à calibrer, ici une caméra à balayage.

L'impulsion lumineuse monochromatique délivrée par le laser 30 présente une durée connue, par exemple 50 ps. Après avoir parcouru la fibre d'entrée 22, elle pénètre dans la fibre optique de calibrage 10. Là, elle exécute des allers-retours dans la fibre 10 en se réfléchissant sur les dépôts multidiélectriques 16 et 17 ; à chaque réflexion sur une des extrémités 12 et 14, une impulsion lumineuse est délivrée par la fibre de calibrage.

Les impulsions lumineuses délivrées par l'extrémité 14 de la fibre de calibrage 10 sont séparées par un intervalle temporel égal à 2d/c où d est la longueur de la fibre de réglage et c la vitesse de la lumière dans la fibre 10. Par exemple, cet intervalle temporel est égal à 325 ps.

Les coefficients de réflexion R1 et R2 des dépôts 16 et 17 étant égaux à environ 0,7, les intensités respectives des impulsions successives délivrées par l'extrémité 14 varient d'un facteur sensiblement égal à 0,5 de l'une à la suivante.

Les impulsions lumineuses successives délivrées par l'extrémité 14 se propagent dans la fibre de sortie 26 et sont délivrées sur la fente 32 de la caméra à balayage 20. A chaque impulsion lumineuse reçue en entrée de la caméra correspond une tache allongée 34, image de la fente illuminée ; chaque image de la fente est affichée sur un écran de visualisation 36 et est aisément photographiable de manière à fournir un document permanent correspondant à la mesure.

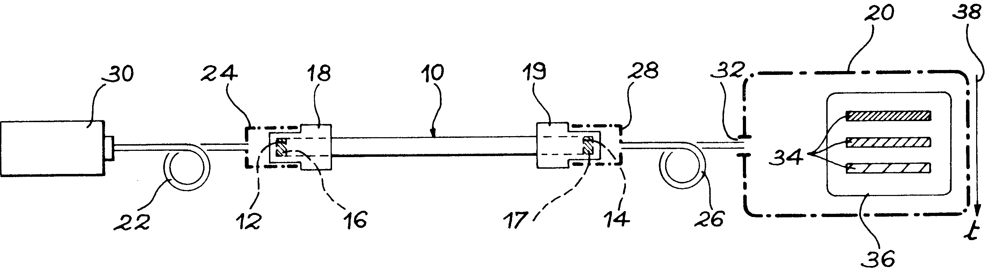

Sur la figure, les taches successives 34 correspondent aux impulsions successives. L'étalement d'une tache 34 selon l'axe temporel 38 de la figure est proportionnel à la durée de l'impulsion lumineuse correspondante. Pour calibrer la caméra, on mesure la distance séparant les points présentant la brillance maximum de deux taches successives 34 (maximum d'intensité des impulsions) et on lui fait correspondre l'intervalle temporel connu séparant deux impulsions lumineuses successives.

La dynamique et la sensibilité du photodétecteur 20 peuvent être contrôlées puisque les intensités des impulsions lumineuses sont connues.

Le dispositif conforme à l'invention, de mise en oeuvre simple et rapide, permet donc bien de calibrer un photodétecteur rapide sans manipulations longues et délicates. Le calibrage obtenu est précis et fiable.

## Revendications

1. Dispositif de calibrage d'un photodétecteur rapide, caractérisé en ce qu'il comprend :
   une source de lumière (30) pour émettre une impulsion lumineuse incidente,
   une fibre optique de calibrage (10) de longueur déterminée, possédant une première et une seconde extrémités (12, 14) polies, la première extrémité (12) étant arrangée pour recevoir l'impulsion lumineuse incidente et la seconde extrémité (14) étant disposée en regard du photodétecteur et des moyens semi-réfléchissants (16, 17) disposés à chaque extrémité (12, 14) de la fibre optique de calibrage (10).

2. Dispositif selon la revendication 1, caractérisé en ce que les moyens semi-réfléchissants (16, 17) possèdent des coefficients de réflexion R1 et R2 tels que le produit de R1 par R2 soit sensiblement égal à 0,5.

3. Dispositif selon la revendication 1 ou 2, caractérisé en ce que le coefficient de réflexion R1 est sensiblement égal à R2.

4. Dispositif selon l'une quelconque des revendications 1 à 3, caractérisé en ce que les moyens semi-réfléchissants (16, 17) sont constitués par des dépôts multidiélectriques déposés sur chacune des extrémités (12, 14) de la fibre optique (10).

5. Dispositif selon l'une quelconque des revendications précédentes, caractérisé en ce qu'une fibre optique d'entrée (22) est prévue pour transmettre l'impulsion lumineuse incidente de la source (30) à la première extrémité de la fibre de calibrage et en ce que des moyens (18, 24) sont prévus pour connecter la fibre optique d'entrée (22) à la première extrémité de la fibre optique de calibrage.

6. Dispositif selon l'une quelconque des revendications précédentes, caractérisé en ce qu'une fibre optique (26) de sortie est prévue pour transmettre les signaux lumineux sortant de la seconde extrémité de la fibre de calibrage vers le photodétecteur et en ce que des moyens (18, 28) sont prévus pour connecter la fibre optique de sortie (26) à la seconde extrémité de la fibre optique de calibrage.

7. Dispositif selon la revendication 6, caractérisé en ce qu'il comprend des connecteurs (18) fixés solidairement sur chaque extrémité de la fibre optique de calibrage (10), pour faciliter son montage sur respectivement la fibre optique d'entrée et la fibre optique de sortie.

Office européen
des brevets

**RAPPORT DE RECHERCHE EUROPEENNE**

Numero de la demande

EP    91 40 2571

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PHOTONICS SPECTRA<br>vol. 16, no. 3, 1 Mars 1982,<br>pages 56 - 60;<br>N.SCHILLER ET AL.: 'PICOSECOND STREAK CAMERAS'<br>* page 56 - page 57 *<br>--- | 1 | G01J11/00 |
| A | PROCEEDINGS OF THE SPIE<br>vol. 1155, 1 Octobre 1989,<br>pages 517 - 528;<br>V.PLATONOV ET AL.: 'PHOTOMETRIC CALIBRATION OF<br>OPTICAL STREAK CAMERAS'<br>* page 521 - page 524 *<br>--- | 1 | |
| A | IEEE TRANSACTIONS ON MICROWAVE THEORY AND<br>TECHNIQUES<br>vol. 30, no. 10, 1 Octobre 1982,<br>pages 1612 - 1621;<br>T.YOSHINO ET AL.: 'FIBER-OPTIC FABRY PEROT<br>INTERFEROMETER'<br>* page 1612 - page 1614 *<br>--- | 1 | |
| A | US-A-4 435 727 (N.SCHILLER ET AL.)<br>* colonne 3 - colonne 4 *<br><br>----- | 1 | **DOMAINES TECHNIQUES RECHERCHES (Int. Cl.5)**<br><br>G01J<br>G04F |

Le présent rapport a été établi pour toutes les revendications

| Lieu de la recherche | Date d'achèvement de la recherche | Examinateur |
|---|---|---|
| LA HAYE | 13 JANVIER 1992 | BOEHM C.E. |